# EUROPÄISCHE PATENTANMELDUNG

(11) **EP 1 369 559 A2**
(43) Veröffentlichungstag der Anmeldung: **10.12.2003**
(21) Anmeldenummer: 03005575.0
(22) Anmeldetag: 12.03.2003
(51) Int. Cl.: F01N 3/30, F01N 3/22

(54) **Ventilvorrichtung**

(30) Priorität: 06.06.2002 DE 10225161
(71) Anmelder: Pierburg GmbH, 41460 Neuss (DE)
(72) Erfinder: Mihai, Goga, 40878 Ratingen (DE)
(74) Vertreter: Ter Smitten, Hans

(57) **Zusammenfassung**

Die Erfindung betrifft eine Ventilvorrichtung, bei der im Bereich des Ventilsitzes Elemente angeordnet sind, die durch Vibration oder Formveränderung eine bei Minustemperaturen entstehende Eisschicht zwischen Ventilschließkörper und Ventilsitz brechen und somit die Funktion eines Sekundärluftsystems auch bei Minustemperaturen sicherstellen.

## Beschreibung

Die Erfindung betrifft eine Ventilvorrichtung, insbesondere für ein Sekundärluftsystem einer Verbrennungskraftmaschine, wobei eine fluidische Verbindung zwischen einem Einlaßkanal und einem Auslaßkanal durch ein Abheben eines Ventilschließkörpers von einem Ventilsitz herstellbar ist.

Das Prinzip solcher Ventilvorrichtungen ist allgemein bekannt und wird beispielsweise in der DE 100 41 128 A1 beschrieben. Die hierin beschriebene Sekundärluftventileinheit weist ein Gehäuse mit einem Sekundärlufteinlaßkanal und mit zumindest zwei Sekundärluftauslaßkanälen auf, die voneinander durch einen Wandbereich getrennt sind und jeweils mit einer Abgasleitung verbindbar sind.

In der DE 197 31 622 A1 und in der DE 43 07 798 werden weitere Sekundärluftventile beschrieben.

Alle in den genannten Schriften beschriebenen Ventilsysteme weisen einen Ventilkörper auf, dessen Ventilschließglied sich zur fluidischen Verbindung von Einlaß- und Auslaßkanal von einem Ventilsitz abhebt. Übliche Sekundärluftventile sind unterdruckgesteuerte abschaltbare Rückschlagventile.

Derartige Sekundärluftsysteme dienen dazu, unverbrauchte Brennstoffanteile in der Kaltstartphase durch Einblasung von Frischluft ins Abgas nachzuoxidieren und durch diese exotherme Reaktion auch das Anspringverhalten eines Katalysators zu verbessern, um auf diese Weise den Schadstoffausstoß zu minimieren. Somit ist es erforderlich, die Funktionsfähigkeit des Sekundärluftventils sofort mit dem Start der Verbrennungskraftmaschine sicherzustellen.

Der Nachteil der bekannten verwendeten Sekundärluftventile ist, daß sich bei Minustemperaturen durch im System vorhandenes Kondensat bzw. feuchte Luft Eisschichten zwischen bzw. an Ventilsitz und Ventilschließglied bilden können, wodurch das Ventil verklebt und in seiner Funktionsfähigkeit in der Kaltstartphase eingeschränkt wird.

Der vorliegenden Erfindung liegt daher die Aufgabe zugrunde, ein Sekundärluftventil zu schaffen, welches das Verkleben von Ventilsitz und Ventilschließglied durch Eisbildung verhindert.

Diese Aufgabe wird dadurch gelöst, daß im Bereich des Ventilsitzes mindestens ein Element angeordnet ist, dessen Form aufgrund bestimmter Einflüsse veränderbar ist.

Durch diese Formänderung werden die Eisschichten zwischen Ventilsitz und Ventilschließkörper gebrochen.

Eine bevorzugte Ausführungsform ist das Einbringen von Elementen im Bereich des Ventilsitzes, die sich bei Bestromung ausdehnen oder vibrieren. Die Bestromung entsteht mit dem Starten des Verbrennungsmotors, so daß sich die Elemente im Moment des Zündens ausdehnen bzw. vibrieren, wodurch die verklebende Eisschicht durch die Relativbewegung der Bauteile zueinander gebrochen wird.

Ein Ausführungsbeispiel eines solchen Elementes, welches sich bei Bestromung ausdehnt bzw. vibriert, ist ein Piezogenerator oder Piezokristall, der durch seine Ausdehnung bzw. Vibration die Funktionstüchtigkeit des Sekundärluftventils sicherstellt.

Eine weitere vorteilhafte Ausführungsform ist das Einbringen von Elementen im Bereich des Ventilsitzes, die bei Temperaturen unter 0°C einen negativen Ausdehnungskoeffizienten besitzen, sich also bei sinkender Temperatur ausdehnen. Diese brechen die Eisschicht nicht aktiv in der Startphase, sondern brechen das Eis ständig bei sich verändernder Temperatur, auch bei Stillstand des Motors. Dadurch wird die Bildung einer in sich homogenen Eisschicht verhindert, da es immer wieder zum Bruch derselben kommt und schließlich auch keine Feuchtigkeit mehr im System vorhanden ist, die den entstehenden Spalt bei Ausdehnung des Elementes durch Eisbildung schließen könnte.

Ein Ausführungsbeispiel eines solchen Elementes ist ein spezieller Kohlenfaserkomposit, der einen negativen Wärmeausdehnungskoeffizienten unter 0°C aufweist. Durch die Inhomogenität der in dieser Ausführung entstehenden Eisschicht kann diese dann bereits beim Starten des Motors durch die auf das Ventilschließglied wirkende Kraft, die durch den Überdruck einer Sekundärluftpumpe und den im Steuerraum herrschenden Unterdruck entsteht, gebrochen werden, so daß das Ventilschließglied vom Sitz gehoben werden kann und somit das Ventil öffnet.

Ausführungsbeispiele der Erfindung sind in den Zeichnungen dargestellt und werden nachfolgend beschrieben.

Figur 1 zeigt die Seitenansicht eines üblichen Sekundärluftventils in geschnittener Darstellung.

Figur 2 zeigt einen Ausschnitt dieses Sekundärluftventils und hier insbesondere einen Ventilschließkörper und einen Ventilsitz einschließlich einer Klebestelle durch Eisbildung.

Figur 3 zeigt die Seitenansicht eines üblichen Sekundärluftventils in geschnittener Darstellung mit einem eingebauten Piezogenerator.

Figur 4 zeigt die Seitenansicht eines üblichen Sekundärluftventils in geschnittener Darstellung mit einem eingebauten Element aus einem Kohlefaserkomposit.

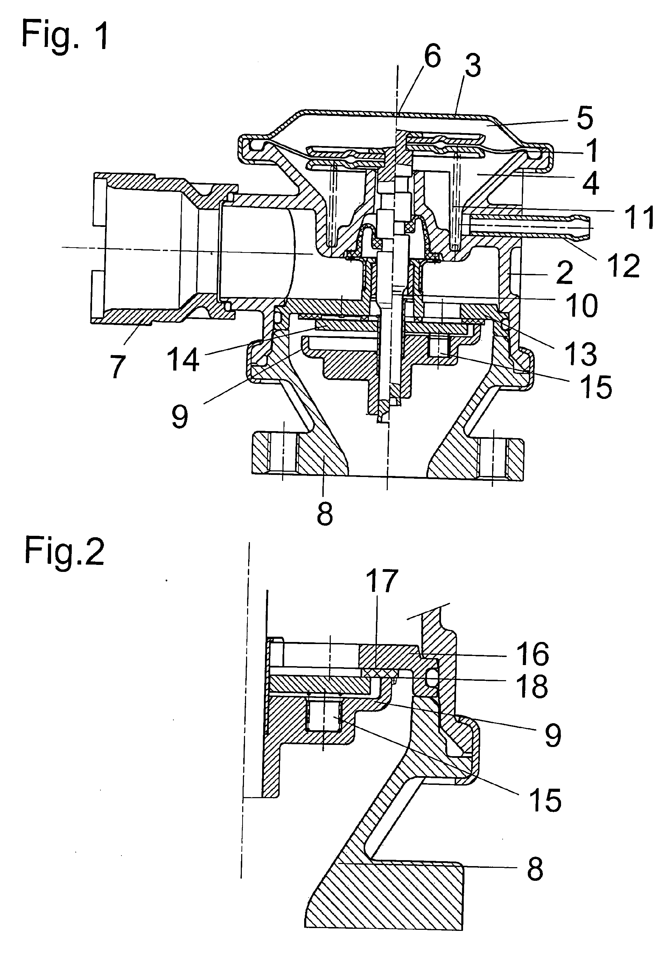

Das in Figur 1 dargestellte Sekundärluftventil besteht aus einer Membrane 1, welche in ihrem Randbereich zwischen ein Gehäuse 2 und einen Deckel 3 eingeklemmt ist. Dadurch entsteht ein Steuerraum 4 zwischen der Membrane 1 und dem Gehäuse 2. Ein zwischen der Membran 1 und dem Deckel 3 entstehende Raum 5 ist über eine Öffnung 6 im Deckel 3 mit der Atmosphäre verbunden, so daß in diesem Raum 5 Atmosphärendruck herrscht. Über einen Einlaßstutzen 7, wird Sekundärluft zu einem Auslaßstutzen 8 geführt, der wiederum fluidisch mit einem Abgasstrang verbunden ist. Die Verbindung zwischen Einlaßstutzen 7 und Auslaßstutzen 8 kann auf bekannte Weise durch ein Ventilschließglied 9, welches über eine Ventilstange 10 in Wirkverbindung mit der Membrane 1 steht, verschlossen werden. Durch eine Feder 11 wird das Ventilschließglied 9 in Schließrichtung vorgespannt. Der Steuerraum 4 verfügt des weiteren über einen Steuerdruckanschlußstutzen 12, über den zum Öffnen des Ventils ein Unterdruck im Steuerraum 4 angelegt wird.

Im störungsfreien Betrieb wird durch diesen Unterdruck und den durch eine Sekundärluftpumpe erzeugten Überdruck am Einlaßstutzen 7, der auf den Ventilschließkörper 9 wirkt, der Ventilschließkörper 9 von einem Ventilsitz 13 abgehoben und so eine fluidische Verbindung zwischen dem Einlaßstutzen 7 und dem Auslaßstutzen 8 hergestellt. Es ist sinnvoll, im Bereich des Ventilschließkörpers 9 eine Rückschlagplatte 14 anzubringen, die Abgasrückstöße von einem Abgasstrang, der in fluidischer Verbindung mit dem Auslaßstutzen 8 steht, in Richtung des Einlaßstutzens 7 verhindert. Eine entsprechend ausgelegte Feder 15 zwischen der Rückschlagplatte 14 und dem Ventilschließglied 9 drückt diese Rückschlagplatte gegen den Ventilsitz 13. Die Feder ist jedoch so schwach ausgelegt, daß die Rückschlagplatte 14 mit dem Ventilschließglied 9 bei am Einlaßstutzen 7 liegendem Überdruck vom Ventilsitz abgehoben wird und somit eine fluidische Verbindung zum Auslaßstutzen 8 hergestellt wird. Erst bei auftretendem Überdruck am Auslaßstutzen 8 durch auftretende Abgasrückstöße unterbricht die Rückschlagplatte 14 die fluidische Verbindung.

In Figur 2 ist zu erkennen, daß der Ventilsitz 13 aus einer Ventilplatte 16 und einer aufvulkanisierten Gummischicht 17 besteht. Zwischen der Gummischicht 17 und dem äußeren Ende des Ventilschließkörpers 9 entstehen bei Minustemperaturen durch das vorhandene Kondensat und die feuchte Luft Klebestellen 18 durch Eisbildung.

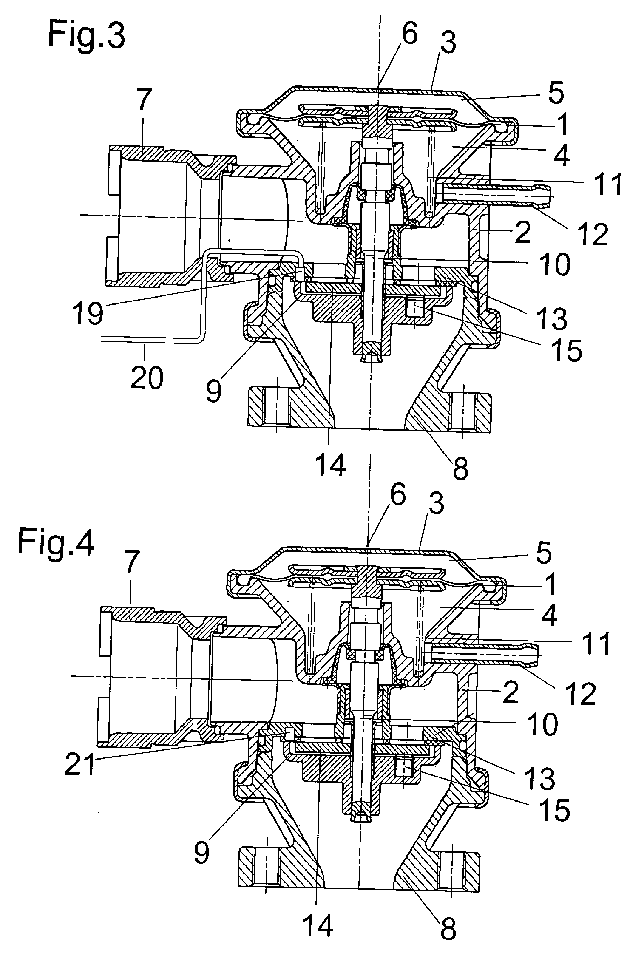

In Figur 3 ist im Bereich des Ventilsitzes 13 unterhalb der Gummischicht 17 in der Ventilplatte 16 ein Element 19 aus einer Piezokeramik angeordnet, welches sich bei Bestromung ausdehnt bzw. mit hoher Frequenz vibriert, so daß sofort beim Starten des Motors und somit der Versorgung des Piezoelementes 19 durch den Bordstrom die Eisschicht durch die entstehende Relativbewegung zwischen Gummischicht 17 und Ventilschließglied 9 oder durch Vibration gebrochen wird. Des weiteren wird ersichtlich, daß die Anschlußdrähte 20 des Piezoelementes 19 über den Ventilsitz und durch das Gehäuse zum Bordstromanschluß geführt werden können. Form, Lage und Anzahl der benötigten Piezoelemente 19 variieren je nach Baugröße und Bauform der Ventile und können durch Versuche ermittelt werden.

In Figur 4 ist in gleicher Weise wie in Figur 3 die Piezokeramik 19, in diesem Fall ein ringförmiges Element 21 aus einem Kohlenfaserkomposit, im Bereich der Ventilplatte 16 bzw. des Ventilsitzes 13 angeordnet. Ein solches Kohlenfaserkomposit 21 kann durch die Steuerung des Verhältnisses zwischen Faser und Phenolharz sowie eine entsprechende Auswahl der Struktur der Faser so ausgelegt werden, daß sein Ausdehnungskoeffizient im negativen °C-Temperaturbereich negativ wird, das Element sich also bei sinkenden Temperaturen ausdehnt. Durch das hier dargestellte Anbringen des Kohlenfaserrings 21 im Schnittstellenbereich zwischen Ventilschließkörper 9 und Ventilsitz 13 kann dieser durch seine Ausdehnung eine Bewegung der Gummischicht 17 erzeugen, so daß durch die Relativbewegung die Eisschicht gebrochen wird. Dieses Zerstören der Eisschicht geschieht bei jeder Temperaturänderung durch das Zusammenziehen bzw. Ausdehnen des Kohlefaserelementes 21. Es entsteht somit eine Inhomogenität der Eisschicht, da sich zum Verschließen der beim Bruch entstehenden Risse immer wieder neues Wasser im Bereich der Risse ansammeln und gefrieren muß. Da nur eine gewisse Menge an Kondensat bzw. feuchter Luft vorhanden ist, wird sich eine solche zusätzliche Eisschicht nach längerer Zeit nicht mehr bilden. In jedem Fall wird jedoch durch die Inhomogenität der entstehenden Eisschicht die Kraft durch das Vakuum im Steuerraum 4 bzw. den auf das Ventilschließglied 9 wirkenden Überdruck bei Start des Motors ausreichend groß sein, um die Eisschicht sofort beim Anlassen des Motors zu brechen. Auch hier ist Form, Lage, Anzahl und auch das Ausdehnungsverhalten der Elemente je nach Ventilbauart verschieden und durch Versuche zu ermitteln.

Mit den erfindungsgemäßen Ausführungen liegen also Konstruktionen vor, die die Funktionalität eines Ventils auch bei entstehender Eisbildung sicherstellen.

Veränderungen bezüglich der Ausführung des Ventils und dessen Steuerung sowie der verwendeten Elemente bezüglich ihrer Größe, Anzahl, Form, Lage und Zusammensetzung haben keine Auswirkung auf den Schutzbereich der Erfindung.

## Patentansprüche

1. Ventilvorrichtung, insbesondere für ein Sekundärluftsystem einer Verbrennungskraftmaschine, wobei eine fluidische Verbindung zwischen einem Einlaßkanal und einem Auslaßkanal'durch ein Abheben eines Ventilschließkörpers von einem Ventilsitz herstellbar ist, **dadurch gekennzeichnet, daß** im Bereich des Ventilsitzes (13) mindestens ein Element (19, 21) angeordnet ist, dessen Form aufgrund bestimmter Einflüsse veränderbar ist.

2. Ventilvorrichtung nach Anspruch 1, **dadurch gekennzeichnet, daß** sich das oder die Elemente (19) bei Bestromung ausdehnen oder vibrieren.

3. Ventilvorrichtung nach Anspruch 1 oder 2, **dadurch gekennzeichnet, daß** das oder die Elemente Piezogeneratoren (19) sind.

4. Ventilvorrichtung nach Anspruch 1, **dadurch gekennzeichnet, daß** das oder die Elemente (21) bei Temperaturen <0°C einen negativen Wärmeausdehnungskoeffizienten besitzen, sich also mit sinkender Temperatur ausdehnen.

5. Ventilvorrichtung nach Anspruch 1 oder 4, **dadurch gekennzeichnet, daß** das oder die Elemente aus einem Kohlefaserkomposit (21) hergestellt sind.
